# EUROPEAN PATENT APPLICATION

(11) **EP 4 112 819 A1**
(43) Date of publication of application: **04.01.2023**
(21) Application number: 21182054.3
(22) Date of filing: 28.06.2021
(51) Int. Cl.: E02F 5/10, H02G 1/10

(54) **APPARATUS FOR INSERTING AN ELONGATE OBJECT INTO A TRENCH**

(71) Applicant: Soil Machine Dynamics Limited, Tyne and Wear NE28 6UZ (GB)
(72) Inventor: The designation of the inventor has not yet been filed
(74) Representative: Vinsome, Rex Martin

(57) **Abstract**

A plough (2) for inserting a cable (4) into a trench (6) in the seabed (8) is disclosed. The plough (2) comprises a plough share (12) for forming a trench (6) in the seabed (8) and a drawbar (14) for enabling attachment of tensile members (20) to the plough (2). The drawbar (14) is moveable relative to the plough share (12) a first position, in which the plough (2) is adapted to be towed by a towing cable (22) to move the plough share (12) relative to the seabed (8) to form a trench (6), and a second position, in which the plough (2) is adapted to be supported by the towing cable (22) to enable the plough (2) apparatus to be deployed to the seabed (8). A cable path (26) receives the cable (4) and an attachment part (16) of the drawbar (114) is moveable relative to the plough share (12) between the second position and a third position, to enable the cable (4) to be received in the cable path (26) from above the plough (2).

## Description

The present disclosure relates to an apparatus for inserting an elongate object into a trench in a floor in a of body of water and relates to particularly, but not exclusively, to an apparatus for inserting a cable into a trench in the seabed.

Apparatus are known for burying cables in the seabed, and consist of a plough having a plough share which forms a trench in the seabed into which the cable is inserted by the plough. However, such ploughs involve loading the cable into the plough by means of a crane manipulator having a cable grab, and a tipping cable trough for manipulating the cable into the plough. Such arrangements suffer from the drawback that in the case of delicate cables, such as lead-lined cables, there is a risk of damage to the cable.

Preferred embodiments of the present disclosure seek to overcome one or more of the above disadvantages.

According to the present disclosure, there is provided an apparatus for inserting an elongate object into a trench in a floor in a body of water, the apparatus comprising:-trench-forming means for forming a trench in a floor of a body of water;
attachment means for enabling attachment of at least one tensile member to the apparatus, wherein the attachment means is moveable relative to the trench-forming means between a first position, in which the apparatus is adapted to be towed by at least one said tensile member to move the trench-forming means relative to the floor of the body of water to form a trench therein, and a second position, in which the apparatus is adapted to be supported by at least one said tensile member to enable the apparatus to be deployed to the floor of the body of water; and
receiving means for receiving at least part of an elongate object to be inserted into the trench; wherein the attachment means is moveable relative to the trench-forming means between the second position and a third position, to enable at least part of the elongate object to be received in the receiving means from a side of the apparatus remote from the trench-forming means.

By providing attachment means moveable relative to the trench-forming means between the second position and a third position, to enable at least part of the elongate object to be received in the receiving means from a side of the apparatus remote from the trench-forming means, this provides the advantage of reducing the risk of damage to the elongate object, by avoiding the need to manipulate the elongate object with cable grabs, and reducing the time taken to load the elongate object into the apparatus, since the elongate object can be loaded into the apparatus from above.

The attachment means may be adapted to be attached to each of a plurality of tensile members at a respective location, and the position of at least one said location may be adjustable relative to the trench-forming means.

This provides the advantage of enabling an effective hitch point of the apparatus to be adjusted, as a result of which the apparatus can be steered by means of a single cable attached to a plurality of said tensile members.

The attachment means may be pivotable between the first and second positions. This provides the advantage of enabling easy movement of the attachment means between the first and second positions by means of actuators.

The attachment means may be pivotable between the second and third positions.

The apparatus may further comprise urging means for urging the elongate object into the trench formed by the trench-forming means.

The urging means may be moveable between a fourth position in which the urging means is adapted to urge the elongate object into the trench formed by the trench-forming means, and a fifth position to enable at least part of the elongate object to be received in the receiving means from a side of the apparatus remote from the trench-forming means.

Movement of the attachments means from the second position to the third position may cause movement of the urging means from the fourth position to the fifth position.

This provides the advantage of simplifying the construction of the apparatus.

The apparatus may further comprise guide means for guiding the elongate object into the receiving means.

This provides the advantage of reducing the risk of damage to the elongate object.

The trench-forming means may further comprise a plurality of nozzles for emitting water jets.

A plurality of said nozzles may be selectively operable.

This provides the advantage of improving efficiency of operation of jetting.

The apparatus may further comprise floor engaging means for engaging the floor of the body of water.

The floor engaging means may comprise a plurality of first floor engaging members for engaging the floor of the body of water forwards of the trench-forming means.

The floor-engaging means may further comprise second floor engaging members for engaging the floor of the body of water rearwardly of the first floor engaging means.

This provides the advantage of enabling sinking of the trench-forming means into a soft floor of the body of water to be controlled, and stability in deployment and recovery of the apparatus from the floor of a body of water to be improved.

The position of the floor engaging means relative to the trench-forming means may be adjustable.

The apparatus may further comprise bend limiting means for limiting bending of the elongate object at an inlet to the receiving means.

This provides the advantage of further reducing the risk of damage to the elongate object by preventing bending of the elongate object around a bend radius less than a predetermined value.

The height of an inlet to the bend limiting means may be adjustable relative to the trench-forming means.

This provides the advantage of enabling greater trench depths, because the entry height of the elongate object to the bend limiting means can be minimised during shallow trenching or when transitioning to and from full depth.

Preferred embodiments of the disclosure will now be described, by way of example only and not in any limitative sense, with reference to the accompanying drawings, in which:-
Figures 1A to 1C show respectively a front, top and side view of a plough of a first embodiment in a lifting mode;
Figures 2A to 2C show respectively a front, top and side view of the plough of Figure 1 in a loading mode with a cable being loaded into the plough;
Figures 3A to 3C show respectively a front, top and side view of the plough of Figure 1 in a ploughing mode with the cable loaded into the plough;
Figures 4A to 4C show the plough of Figure 3 in its full depth ploughing condition;
Figures 5A to 5C show respectively a front, top and side view of a plough of a second embodiment in a lifting mode;
Figures 6A to 6C show respectively a front, top and side view of the plough of Figure 5 in a loading mode with a cable being loaded into the plough;
Figures 7A to 7C show respectively a front, top and side view of the plough of Figure 5 in a ploughing mode with the cable loaded into the plough; and
Figures 8A and 8B show the plough of Figure 7 in its full depth ploughing condition.

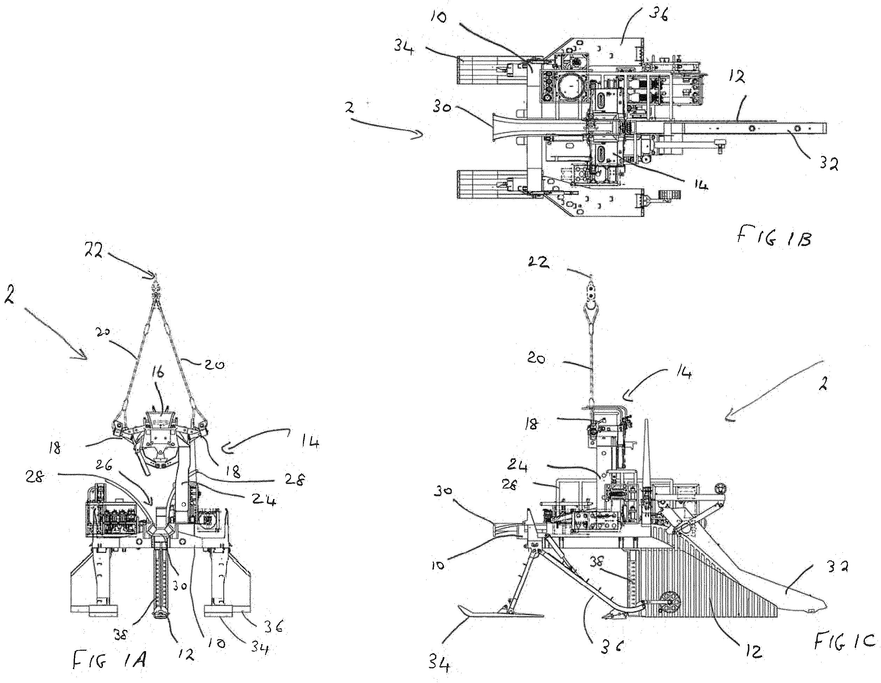

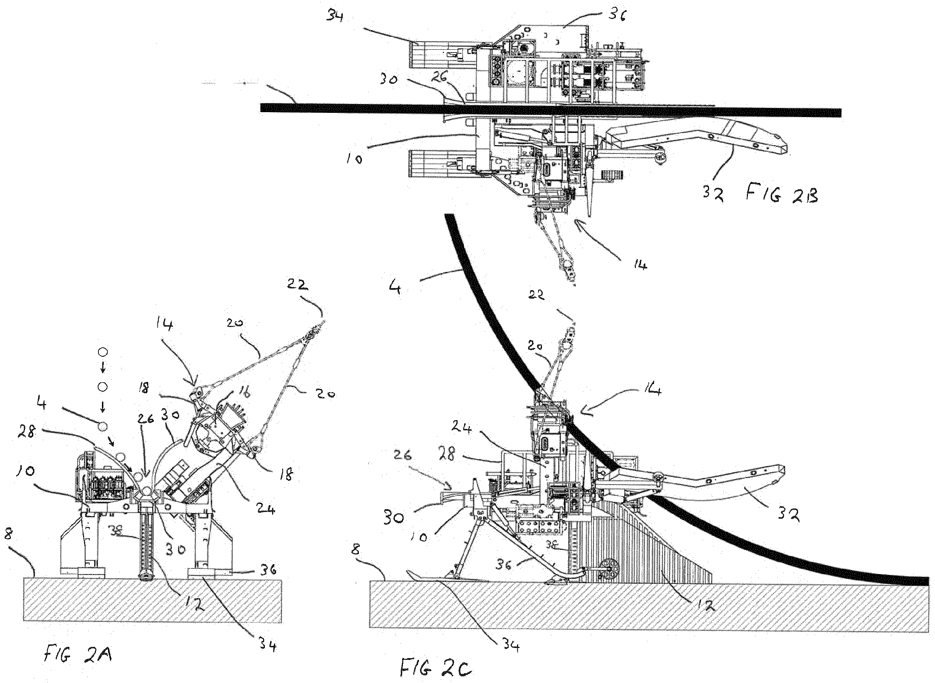

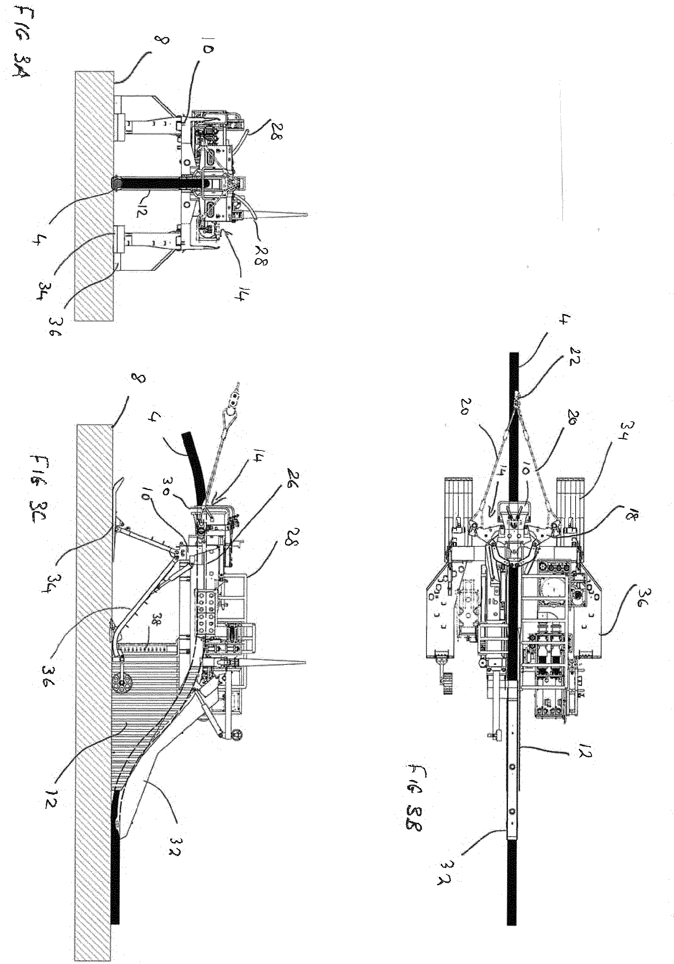

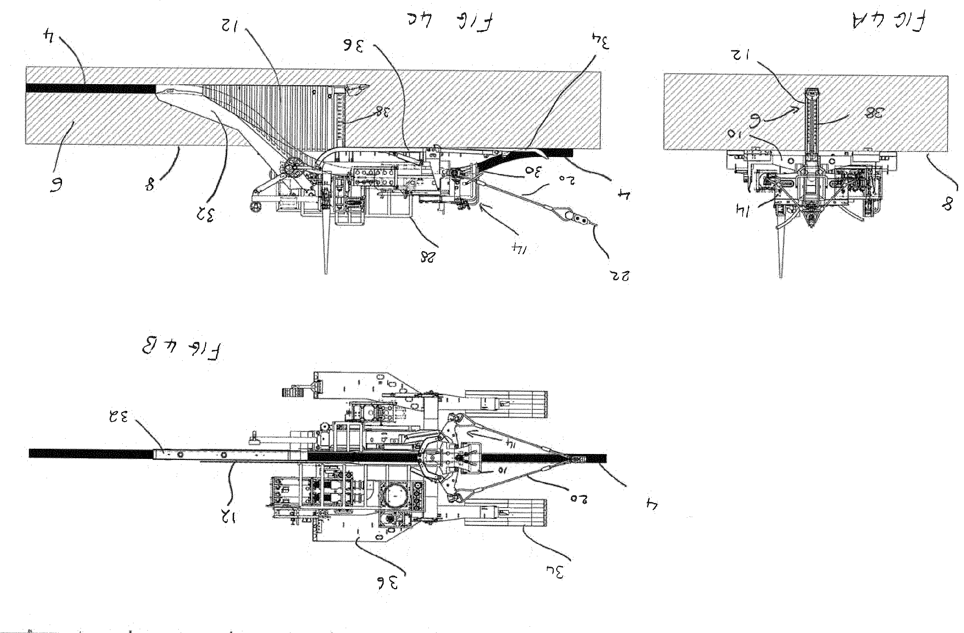

Referring to Figures 1A to 1C, an apparatus in the form a plough 2 for inserting an elongate object in the form of a cable 4 (Figures 2 to 4) into a trench 6 (Figure 4) in the seabed 8 has a body 10 which supports trench-forming means in the form a plough share 12 for forming the trench 6 in the seabed 8. The plough 2 has attachment means in the form of a drawbar 14 having an attachment part 16, including a pair of attachment locations 18 for respective tensile members 20 forming part of a towing cable 22 for towing the plough 2 (Figures 3 and 4), and a support member 24 pivotably attached to the attachment part 16 at one end and to the body 10 at the other end. The attachment locations 18 are pivotable relative to the support member 24, as a result of which the effective hitch point of the towing cable 22 is adjustable by pivoting one or both of the attachment locations 18 about their respective pivot axes.

Receiving means in the form of a cable path 26 is provided in an upper part of the body 10 on an opposite side of the body 10 to the plough share 12, and guide means in the form of curved cable guides 28 is provided at the inlet to the cable path 26, to assist in guiding the cable 4 into the cable path 26 and to minimise the risk of damage to the cable 4. Bend limiting means in the form of a bellmouth 30 is provided at an inlet to the cable path 26, to prevent bending of the cable 4 around a bend radius smaller than a predetermined value.

Urging means in the form of a depressor 32 is provided rearwardly of and above the cable path 26 and is pivotably mounted to a lower part of the support member 24 so that the depressor 32 is pivotable relative to the body 10 to urge the cable 4 into a trench 6 formed in the seabed 8 by the plough share 12. The depressor 32 is also pivotable between a fourth position, in which it is located above and rearwardly of the cable path 28 to urge the cable 4 into the trench 6, and a fifth position, in which it is moved out of the way of the cable path 28 to enable the cable 4 to be located in the cable path 28 from above the plough 2.

Floor engaging means in the form of front skids 34 and rear skids 36 is pivotably mounted to the body 10 at a forward part of the body 10. The height of the plough share 12 can be adjusted by pivoting the front skids 34 relative to the body 10, and the rear skids 36 provide stability while deploying the plough 2 to and recovering the plough 2 from the seabed 8.

A row of jetting nozzles 38 is provided at a forward edge of the plough share 12, for emitting water jets to assist in breaking soil when the trench 6 is formed by the plough share 12. Water can be selectively jetted from some or all of the nozzles 38, therefore increasing the efficiency of operation of the jetting nozzles 38.

The drawbar 14 is pivotable relative to the body 10 about a first axis between a first position, in which the plough 2 is in its ploughing mode (Figures 3 and 4) and in which the plough 2 can be towed by the towing cable 22 to cause the plough share 12 to form a trench 6 in the seabed 8 into which the cable 4 is inserted by means of the depressor 32, and a second position (Figure 1) in which the plough 2 is in its lifting mode and can be deployed to or recovered from the seabed 8 by means of the towing cable 22. This enables a single towing cable 22 to be used for deploying and recovery of the plough 2 to the seabed 8 and for towing the plough 2 to enable a cable 4 to be buried in the seabed 8.

The drawbar 14 is also pivotable relative to the body 10 about a second axis, generally perpendicular to the first axis, between the second position and a third position (Figure 2), in which the cable 4 to be buried can be inserted into the cable path 26 from above the plough 2.

The operation of the plough 2 of Figures 1 to 4 will now be described.

Referring to Figure 1, the plough 2 is initially deployed from a surface vessel (not shown) to the seabed 8 by means of the towing cable 22 supporting the plough 2, the plough 2 being in its lifting mode in which the drawbar 14 is located in its second position. The plough 2 is located on the seabed 8, and the front 34 and rear 36 skids support the plough 2 so that the plough share 12 does not sink into the seabed 8.

The drawbar 14 is then pivoted from the second position to the third position (Figure 2), and because the depressor 32 is mounted to the drawbar 14, pivoting of the drawbar 14 from the second position to the third position causes pivoting of the depressor 32 from the fourth position to the fifth position to enable access the rear part of the cable path 26. The cable 4 is then introduced into the cable path 26 from above (Figure 3), and the cable guides 28 assist in guiding the cable 4 into the cable path 26. Once the cable 4 is located in the cable path 26, the drawbar 14 is pivoted from the third position back to the second position which in turn causes the depressor 32 to be pivoted from the fifth position back to the fourth position, so that the drawbar 14 and depressor 32 are located above the cable path 26. The drawbar 14 is then pivoted relative to the body 10 into its first position, and the depth of ploughing by the plough share 12 is then selected by means of suitable selection of the orientation of the rear 36 and front 34 skids relative to the body 10.

The plough 2 is then towed by means of the towing cable 22, to cause the plough share 12 to form a trench 6 in the seabed 8, and the cable 4 passes from the cable path 26 into the trench 6 and is urged into the trench 6 by the depressor 32. Formation of the trench 6 is assisted by water jets from jetting nozzles 38 on the forward edge of the plough share 12, and the efficiency of jetting can be improved by suitable selection of predetermined jetting nozzles 38.

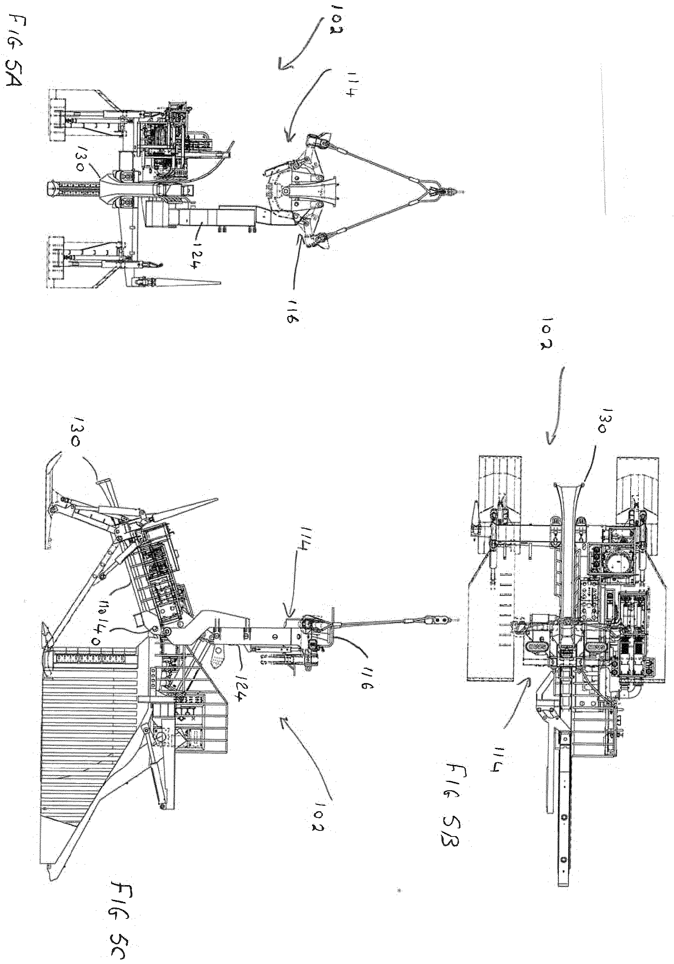

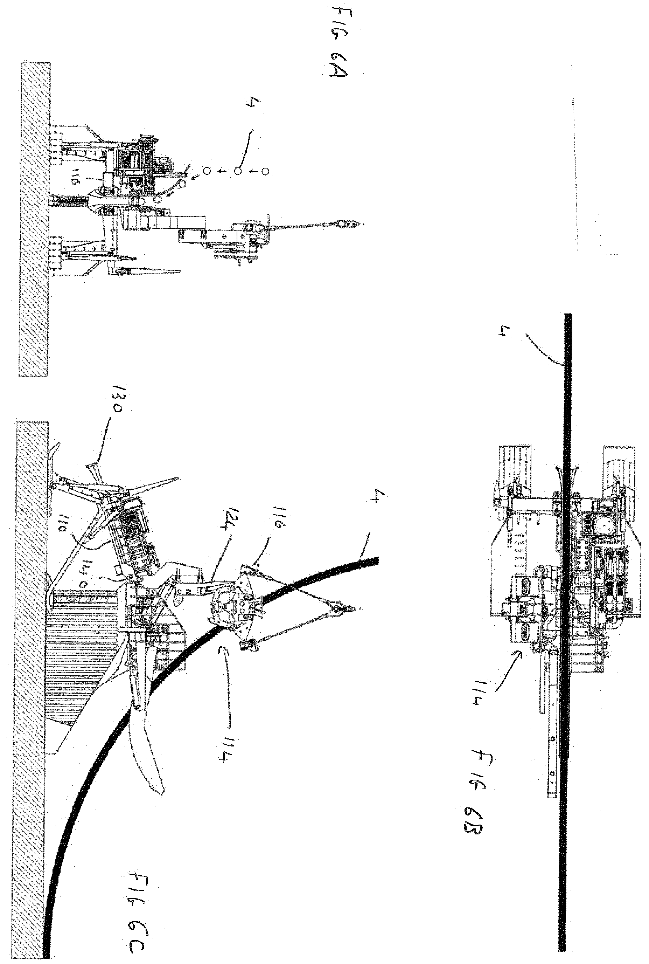

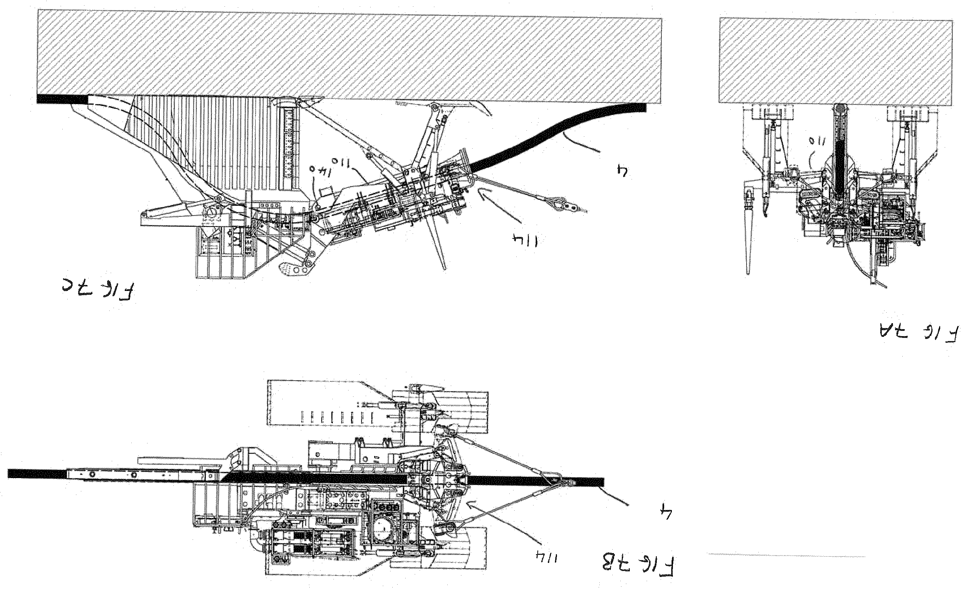

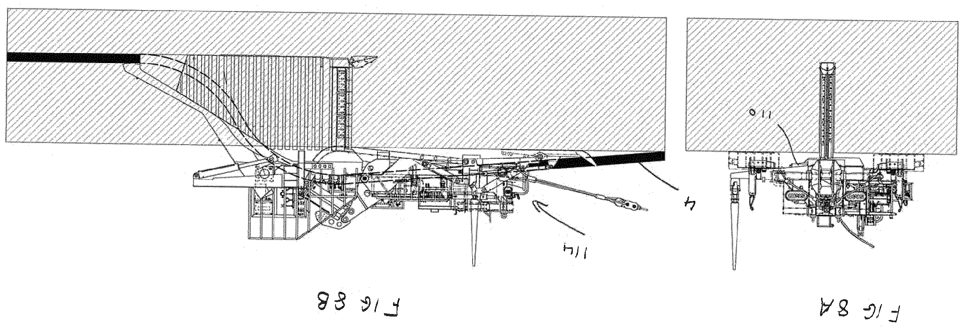

Referring to Figures 5 to 8, a plough 102 of a second embodiment is shown, in which parts common to the embodiment of Figures 1 to 4 are denoted by like reference numerals but increased by 100. In the plough 102 of Figures 5 to 8, the attachment part 116 of the drawbar 114 is pivotable relative to the support member 124 between the second position (Figure 5) and the third position (Figure 6) to provide access to the cable path 126 from above to enable the cable 4 to loaded into the cable path 126.

In addition, the plough body 110 is pivotable relative to the plough share 112 about pivot axis 140, which enables the height of the bellmouth 130 to be adjusted. This enables the bellmouth entry height to be minimised during shallow trenching or in transitioning to and from full depth, as a result of which the trench depth can be greater.

It will be appreciated by persons skilled in the art that the above embodiments have been described by way of example only and not in any limitative sense, and that various alterations and modifications are possible without departure from the scope of the disclosure as defined by the appended claims,

## Claims

1. An apparatus for inserting an elongate object into a trench in a floor in a body of water, the apparatus comprising:-
trench-forming means for forming a trench in a floor of a body of water;
attachment means for enabling attachment of at least one tensile member to the apparatus, wherein the attachment means is moveable relative to the trench-forming means between a first position, in which the apparatus is adapted to be towed by at least one said tensile member to move the trench-forming means relative to the floor of the body of water to form a trench therein, and a second position, in which the apparatus is adapted to be supported by at least one said tensile member to enable the apparatus to be deployed to the floor of the body of water; and
receiving means for receiving at least part of an elongate object to be inserted into the trench; wherein the attachment means is moveable relative to the trench-forming means between the second position and a third position, to enable at least part of the elongate object to be received in the receiving means from a side of the apparatus remote from the trench-forming means.

2. An apparatus according to claim 1, wherein the attachment means is adapted to be attached to each of a plurality of tensile members at a respective location, and the position of at least one said location is adjustable relative to the trench-forming means.

3. An apparatus according to claim 1 or 2, wherein the attachment means is pivotable between the first and second positions.

4. An apparatus according to any one of the preceding claims, wherein the attachment means is pivotable between the second and third positions.

5. An apparatus according to any one of the preceding claims, further comprising urging means for urging the elongate object into the trench formed by the trench-forming means.

6. An apparatus according to claim 5, wherein the urging means is moveable between a fourth position in which the urging means is adapted to urge the elongate object into the trench formed by the trench-forming means, and a fifth position to enable at least part of the elongate object to be received in the receiving means from a side of the apparatus remote from the trench-forming means.

7. An apparatus according to claim 6, wherein movement of the attachments means from the second position to the third position causes movement of the urging means from the fourth position to the fifth position.

8. An apparatus according to any one of the preceding claims, including one or more of the following features:
(i) further comprising guide means for guiding the elongate object into the receiving means; or
(ii) wherein the trench-forming means further comprises a plurality of nozzles for emitting water jets.

9. An apparatus according to claim 8, wherein a plurality of said nozzles is selectively operable.

10. An apparatus according to any one of the preceding claims, further comprising floor engaging means for engaging the floor of the body of water.

11. An apparatus according to claim 10, wherein the floor engaging means comprises a plurality of first floor engaging members for engaging the floor of the body of water forwards of the trench-forming means.

12. An apparatus according to claim 11, wherein the floor-engaging means further comprises second floor engaging members for engaging the floor of the body of water rearwardly of the first floor engaging means.

13. An apparatus according to any one of claims 10 to 12, wherein the position of the floor engaging means relative to the trench-forming means is adjustable.

14. An apparatus according to any one of the preceding claims, further comprising bend limiting means for limiting bending of the elongate object at an inlet to the receiving means.

15. An apparatus according to claim 14, wherein a height of an inlet to the bend limiting means is adjustable relative to the trench-forming means.
